Europäisches Patentamt

European Patent Office

Office européen des brevets

(19)

(11) Publication number: **0 051 915**
**B1**

# (12) EUROPEAN PATENT SPECIFICATION

(45) Date of publication of patent specification: **15.05.85**

(51) Int. Cl.⁴: **G 02 B 6/36**

(21) Application number: **81304234.8**

(22) Date of filing: **16.09.81**

(54) **An optical connector and an optical connection including the connector.**

(30) Priority: **07.11.80 US 204763**

(43) Date of publication of application:
**19.05.82 Bulletin 82/20**

(45) Publication of the grant of the patent:
**15.05.85 Bulletin 85/20**

(84) Designated Contracting States:
**DE FR GB SE**

(56) References cited:
**US-A-4 124 272**
**US-A-4 192 056**

(73) Proprietor: **LITTON SYSTEMS, INC.**
**1213 North Main Street**
**Blacksburg Virginia 24060 (US)**

(72) Inventor: **Dorsey, Glenn Forrest**
**2811 Tall Oaks Drive**
**Blacksburg Virginia 24060 (US)**

(74) Representative: **Cheyne, John Robert Alexander**
**Mackenzie et al**
**HASELTINE LAKE & CO.**
**28 Southampton Buildings Chancery Lane**
**London WC2A 1AT (GB)**

Courier Press, Leamington Spa, England.

## Description

This invention relates to an optical connector for use with fibre optic cables.

U.S. 4124272 discloses an optical connector for coupling two fibre optic cables for rotation relatively to each other, comprising two parts which are rotatable relatively to each other, each part being adapted to fixedly receive a respective fibre optic cable and being provided with a bushing having a bore for receiving an exposed length of at least one fibre of the corresponding fibre optic cable, the bores in the bushings being aligned with each other and with the axis of relative rotation between the two parts.

A problem with connectors such as that disclosed in US 4124272 is that it is difficult to maintain the fibres in the respective bores in strict alignment. Misalignment can result in unacceptable transmission losses across the connector.

According to the present invention, one of the bushings is adapted to receive the exposed end portions of the fibres of both cables in such a way as to maintain the said end portions in aligned, mutually-opposed, spaced relationship therein, while permitting the end portion of the fibre emerging from the other bushing to rotate within the said one bushing, the said one bushing being provided with a transverse gauging passage, which communicates with the axial bore in that bushing, for use in establishing a desired gap between the facing ends of said fibres, and access to the gauging passage being provided through the part in which the said one bushing is provided.

With a connector constructed in accordance with the present invention, the end portions of the fibres are maintained in alignment as a result of their being received in the same bore as each other. The gauging passage makes it possible to set accurately the gap between the oppositely facing end portions.

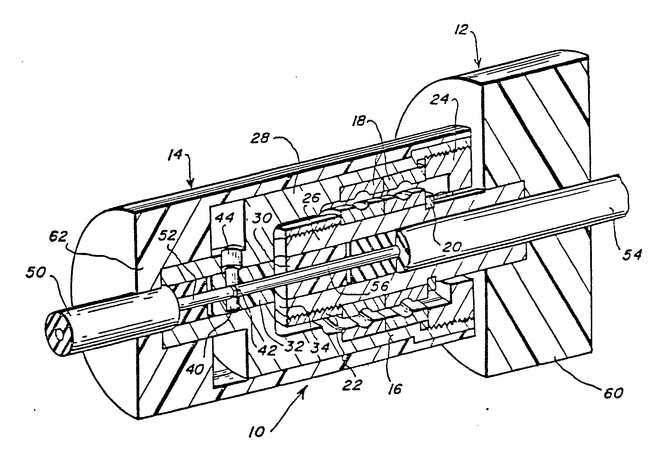

For a better understanding of the present invention, and to show how it may be carried into effect, reference will now be made, by way of example, to the accompanying drawing, which illustrates in partly sectional perspective view, a single-channel connection between two fibre optic cables.

The fibre optic connection 10 generally includes a first part 12 and a second part 14 for maintaining two fibre optic cables 50 and 54 axially aligned during relative rotation thereof. For convenience, the part 12 will be referred to from now on as a rotor assembly and the part 14 as a stator assembly. The rotor assembly 12 includes a spigot 26 which is mounted within a recess in an axially extending sleeve 16 which is part of a cylindrical member 28 of the stator assembly 14 by a pair of pre-loaded bearings 18. These bearings 18 are secured axially with respect to the spigot 26 by a retaining ring 20 and a nut 22 and are maintained axially with respect to the sleeve 16 by a nut 24.

The spigot 26 and the cylindrical member 28 each have an axial bore for receiving the respective fibre optic cables 54 and 50. Bushings 30 and 32 are mounted within the respective adjacent ends of these bores and are separated by a selected bushing gap 34. Each bushing 30 and 32 has an axial bore of such a size as to receive an optic fibre. The stator bushing 32 additionally has a gauging passage 40 which perpendicularly intersects its axial bore to define a gauging region 42. An aperture 44 in the cylindrical member 14 provides access to the gauging passage 40 within the stator bushing for a gauging tool or other conventional gauging means.

The fibre optic cable 50 is fixed by an adhesive or other conventional means in the stator bore and has an exposed length of optic fibre 52 which extends into the stator bushing 32 to a selected gauged location within the gauging region 42. The fibre optic cable 54 is similarly secured in the rotor bore and has an exposed length of optic fibre 56 passing through the rotor bushing 30, across the bushing gap 34, and into the stator bushing 32 to a selected gauged location within the gauging region 42 without contacting the first optic fibre 52. Preferably there is, for example, a gap of 1 mil (approximately 25.4 micrometers) between the fibres. Rotation of the rotor assembly 12 rotates the rotor optic fibre 56 within the stator bushing 32 which maintains the axial alignment of the fibre ends thereby optically coupling the cables.

In the preferred embodiment, the bushings 30 and 32 are made from an anti-friction material, such as Teflon (Registered Trade Mark) for preventing wear to the rotor optic fibre 56. Also, the rotor assembly 12 includes a flanged end 60 which provides a suitable mounting base and the stator assembly 14 includes a plastic sheath 62 which covers the access aperture 44 and prevents dirt from getting into the gauging passage 40.

## Claims

1. An optical connector for coupling two fibre optic cables for rotation relatively to each other, comprising two parts (26, 28) which are rotatable relatively to each other, each part being adapted to fixedly receive a respective fibre optic cable (54, 50) and being provided with a bushing (30, 32) having a bore for receiving an exposed length (56, 52) of at least one fibre of the corresponding fibre optic cable, the bores in the bushings being aligned with each other and with the axis of relative rotation between the two parts, characterized in that one (32) of the bushings (32, 30) is adapted to receive the exposed end portions (52, 56) of the fibres of both cables in such a way as to maintain the said end portions in aligned, mutually-opposed, spaced relationship therein, while permitting the end portion (56) of the fibre emerging from the other bushing (30) to rotate within the said one bushing (32), the said one bushing (32) being provided with a transverse gauging passage (40), which communicates with the axial bore in that bushing (32), for use in establishing a desired gap between the facing ends of said fibres, and access (44) to the gauging passage (40) being provided through the part (28) in which the said one bushing (32) is provided.

2. An optical connector as claimed in claim 1, characterized in that one (26) of the parts (26, 28) comprises a spigot which is rotatably received in a recess in the other part (28).

3. An optical connector as claimed in claim 1 or 2, characterized in that the two parts (26, 28) are relatively rotatable by means of bearings (18).

4. An optical connector as claimed in any one of the preceding claims, characterized in that an axial gap (34) is provided between the bushings (32, 30).

5. An optical connector as claimed in any one of the preceding claims, characterized in that the gauging passage (40) perpendicularly intersects the bore in the bushing (32).

6. An optical connector as claimed in any one of the preceding claims, characterized in that the bushings (30, 32) are made from an anti-friction material.

7. An optical connection comprising two fibre optic cables interconnected by an optical connector in accordance with any one of the preceding claims, characterized in that each cable (50, 54) includes a fibre having an exposed end portion (52, 56), one (52) of the end portions (52, 56) passing into the said one bushing (32) and terminating within the gauging passage (40), and the other end portion (56) passing through the said other bushing (30) and into the said one bushing (32), and terminating within the gauging passage (40) at a position spaced from the said one end portion (52).

**Patentansprüche**

1. Optischer Verbinder zur Verbindung zweier sich gegenseitig drehender faseroptischer Kabel, mit zwei Teilstücken (26, 28) die gegenseitig drehbar sind, wobei jedes Teilstück ein entsprechendes faseroptisches Kabel (54, 50) fest aufnehmen kann und eine Muffe (30, 32) mit einer Bohrung zur Aufnahme eines bloßen Bereichs (56, 52) wenigstens einer Faser des entsprechenden faseroptischen Kabels besitzt und wobei die Bohrungen in den Muffen miteinander und mit der Achse der entsprechenden Drehung der beiden Teilstücke fluchten, dadurch gekennzeichnet, daß eine Muffe (32) der Muffen (32, 30) die bloßen Endstücke (52, 56) der Fasern beider Kabel aufnehmen kann, und zwar dermaßen, daß die besagten Endstücke darin fluchtend und mit Abstand einander gegenüberliegend angeordnet sind, und daß das aus der anderen Muffe (30) heraustretende Endstück (56) der Faser sich innerhalb der einen Muffe (32) drehen kann, die mit einem transversalen Meßgang (40) ausgestattet ist, der mit der Axialbohrung in dieser Muffe (32) verbunden ist, um einen erwünschten Spalt zwischen den Kopfenden der besagten Fasern zu erreichen und daß das Teilstück (28), in dem sich die besagte Muffe (32) befindet, mit einem Zugang (44) zum Meßgang (40) versehen ist.

2. Optischer Verbinder nach Anspruch 1, dadurch gekennzeichnet, daß eines (26) der Teilstücke (26, 28) eine Muffenverbindung enthält, die in einer Aussparung des anderen Teilstückes (28) drehbar aufgenommen ist.

3. Optischer Verbinder nach Anspruch 1 oder 2, dadurch gekennzeichnet, daß die beiden Teilstücke (26, 28) mittels Lager (18) gegenseitig drehbar sind.

4. Optischer Verbinder nach einem der vorhergehenden Ansprüche, dadurch gekennzeichnet, daß ein Axialspalt (34) zwischen den Muffen (32, 30) vorgesehen ist.

5. Optischer Verbinder nach einem der vorhergehenden Ansprüche, dadurch gekennzeichnet, daß der Meßgang (40) die Bohrung in der Muffe (32) senkrecht schneidet.

6. Optischer Verbinder nach einem der vorhergehenden Ansprüche, dadurch gekennzeichnet, daß die Muffen (30, 32) aus Antifriktionsmaterial hergestellt sind.

7. Optische Verbindung mit zwei faseroptischen Kabeln, die durch einen optischen Verbinder nach einem der vorhergehenden Ansprüche miteinander verbunden sind, dadurch gekennzeichnet, daß jedes Kabel (50, 54) eine Faser mit einem bloßen Endstück enthält (52, 56) wobei eines (52) der Endstücke (52, 56) in die besagte Muffe (32) hineinläuft und innerhalb des Meßgangs (40) endet und wobei das andere Endstück (56) durch die andere Muffe (30) in die eine Muffe (32) hineinläuft und innerhalb des Meßgangs (40) endet und zwar mit einem Zwischenraum zu dem einen Endstück (52).

**Revendications**

1. Connecteur optique pour accoupler deux câbles en fibres optiques afin de permettre leur rotation relative, comprenant deux parties (26, 28) pouvant tourner l'une par rapport à l'autre, chaque partie étant conçue pour recevoir rigidement un câble respectif (54, 50) en fibres optiques et étant munie d'un coussinet (30, 32) percé d'un trou destiné à loger un tronçon dénudé (56, 52) d'au moins l'une des fibres optiques du câble correspondant en fibres optiques, les trous desdits coussinets étant alignés l'un avec l'autre et avec l'axe de la rotation relative des deux parties, caractérisé par le fait que l'un (32) des coussinets (32, 30) est conçu pour recevoir les régions extrêmes dénudées (52, 56) des fibres des deux câbles, de manière à y maintenir lesdites régions extrêmes en relation alignée, mutuellement opposée et espacée, tout en permettant à la région extrême (56) de la fibre dépassant de l'autre coussinet (30) de tourner à l'intérieur du premier coussinet cité (32), ce coussinet précité (32) étant percé d'un canal transversal de calibrage (40) qui communique avec le trou axial ménagé dans ce coussinet (32), afin d'établir un intervalle souhaité entre les extrémités desdites fibres qui se font face, et l'accès (44) au canal de calibrage (40) étant assuré à travers la partie (28) dans laquelle ledit coussinet précité (32) est logé.

2. Connecteur optique selon la revendication 1, caractérisé par le fait que l'une (26) des parties (26, 28) présente une broche logée à rotation dans un évidement pratiqué dans l'autre partie (28).

3. Connecteur optique selon la revendication 1 ou 2, caractérisé par le fait que les deux parties (26, 28) peuvent opérer une rotation relative au moyen de paliers (18).

4. Connecteur optique selon l'une quelconque des revendications précédentes, caractérisé par le fait qu'un intervalle axial (34) est réservé entre les coussinets (32, 30).

5. Connecteur optique selon l'une quelconque des revendications précédentes, caractérisé par le fait que le canal de calibrage (40) coupe perpendiculairement le trou pratiqué dans le coussinet (32).

6. Connecteur optique selon l'une quelconque des revendications précédentes, caractérisé par le fait que les coussinets (30, 32) consistent en un matériau anti-friction.

7. Connexion optique comprenant deux câbles en fibres optiques interconnectés par un connecteur optique selon l'une quelconque des revendications précédentes, caractérisée par le fait que chaque câble (50, 54) renferme une fibre présentant une région extrême dénudée (52, 56), l'une (52) des régions extrêmes (52, 56) s'engageant dans l'un (32) des coussinets précités et s'achevant à l'intérieur du canal de calibrage (40), et l'autre région extrême (56) traversant ledit autre coussinet (30), pénétrant dans ledit premier coussinet (32) et s'achevant, à l'intérieur du canal de calibrage (40), en un endroit espacé de ladite région extrême précitée (52).